# EUROPÄISCHE PATENTANMELDUNG

(11) **EP 2 679 858 A2**
(43) Veröffentlichungstag der Anmeldung: **01.01.2014**
(21) Anmeldenummer: 13168469.8
(22) Anmeldetag: 21.05.2013
(51) Int. Cl.: F16F 9/46

(54) **Verstellbare Dämpfventileinrichtung**

(30) Priorität: 25.06.2012 DE 102012210685
(71) Anmelder: ZF Friedrichshafen AG, 88038 Friedrichshafen (DE)
(72) Erfinder: Manger, Thomas, 97535 Wasserlosen (DE); Sauerbrey, Achim, 97422 Schweinfurt (DE)

(57) **Zusammenfassung**

Verstellbare Dämpfventileinrichtung (1), umfassend einen Aktuator (11) zur Ansteuerung eines Hauptstufenventils (19), wobei das Hauptstufenventil (19) einen starren Hauptstufenventilkörper (27) aufweist, der eine axiale Betriebsbewegung zu einer Ventilsitzfläche (39) des Hauptstufenventils (11) ausführt, wobei dem Hauptstufenventilkörper (27) ein Voröffnungsventil (57) vorgeschaltet ist, das mindestens ein Federelement aufweist, das wiederum einen Voröffnungsventilkörper vorspannt, wobei sich der Hauptstufenventilkörper (27) in der geschlossenen Betriebsstellung über das Voröffnungsventil (57) auf der Ventilsitzfläche (39) abstützt.

## Beschreibung

Die Erfindung betrifft eine verstellbare Dämpfventileinrichtung gemäß dem Oberbegriff von Patentanspruch 1.

Aus der DE 10 2008 041 735 B3 ist eine verstellbare Dämpfventileinrichtung bekannt, bei der mittels eines Vorstufenventils ein Hauptstufenventil ansteuerbar ist. Das Hauptstufenventil umfasst einen starren Hauptstufenventilkörper, der auf einem Ventilsitzring aufliegt. Bei einer Anströmung des Hauptstufenventilkörpers über eine Durchgangsöffnung hebt der Hauptstufenventilkörper von dem Ventilsitzring ab, so dass Dämpfmedium die Dämpfventileinrichtung durchströmen kann.

Bei einer entgegengesetzten Anströmung der Dämpfventileinrichtung über mindestens eine radiale Öffnung hebt der Ventilsitzring zusammen mit dem Hauptstufenventilkörper von einer gehäuseseitigen Ventilsitzfläche ab.

Unter bestimmten Bedingungen treten in der Dämpfventileinrichtung Anschlaggeräusche auf, die von dem Ventilsitzring zumindest mitverursacht werden. Ein Mittel zur Reduzierung der Geräusche besteht darin, dass eine permanente Drosselöffnung vorgesehen ist, die z. B. als Prägung in der Stirnfläche des Hauptstufenventilkörpers oder in der der Ventilsitzfläche des Ventilrings ausgeführt ist. Die filigranen Bauteile erschweren das präzise Einprägen einer permanenten Drosselöffnung, ohne dass dabei das Bauteil selbst beschädigt wird.

Aus der DE 37 19 113 C1 ist eine Dämpfventileinrichtung bekannt, die die Basis für die Dämpfventileinrichtung gemäß der DE 10 2008 041 735 B3 darstellt. Neben einem starren Hauptstufenventilkörper offenbart die DE 37 19 113 C1 in der Fig. 3 auch eine Variante mit einer Membran als Hauptstufenventilkörper. Die Membran ist an ihrem äußeren Umfang fixiert und bildet im mittleren Durchmesserbereich mit einer Ventilsitzfläche ein Hauptstufenventil. Mit dieser Konstruktion sind einige Nachteile verbunden, so dass sich dieses Konstruktionsprinzip nicht durchsetzen konnte. So muss die Membran den gesamten Abhubweg ausgehend von der Ventilsitzfläche ausführen. Bei einer Membran, die z. B. von einer Tellerfeder gebildet wird, beeinflusst sehr stark die Tellerfedercharakteristik das Abhubverhalten. Es gibt auch keine axiale Abstützung der Membran, um den Abhubweg zu begrenzen und damit die Dauerfestigkeit zu steigern.

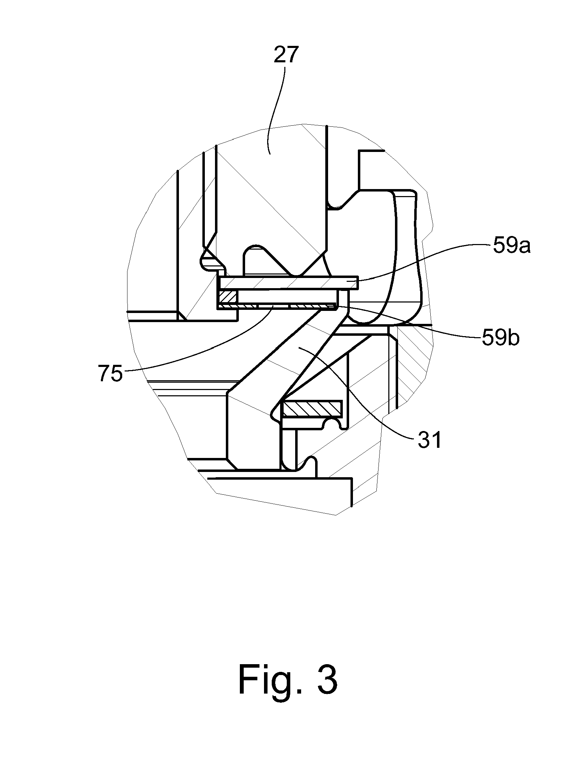

Aus der DE 198 22 448 A1 ist ebenfalls eine verstellbare Dämpfventileinrichtung mit einem Hauptstufenventil bekannt. Hydraulisch und betreffend die räumliche Anordnung parallel zum Hauptstufenventil kommt ein konstanter Drosselquerschnitt, Fig. 3, zur Anwendung, der wiederum mit einem Zusatzventil zusammenwirkt.

Die Aufgabe der vorliegenden Erfindung ist es, eine Dämpfventileinrichtung zu realisieren, bei der das Geräuschproblem minimiert ist.

Erfindungsgemäß wird die Aufgabe dadurch gelöst, dass dem Hauptstufenventilkörper ein Voröffnungsventil vorgeschaltet ist, das mindestens ein Federelement aufweist, das wiederum einen Voröffnungsventilkörper vorspannt, wobei sich der Hauptstufenventilkörper in der geschlossenen Betriebsstellung über das Voröffnungsventil auf der Ventilsitzfläche abstützt.

Mit dem Voröffnungsventil werden gleich zwei wesentliche funktionale Vorteile erreicht. Zum einen entstehen bei einer Schließbewegung des Hauptstufenventils aufgrund der elastischen Lagerung über das Federelement keine Anschlaggeräusche. Des Weiteren wird über das Voröffnungsventil ein besserer Dämpfkraftübergang zwischen der Betriebsstellung "Hauptstufenventil geschlossen" und "Hauptstufenventil in Öffnungsbewegung" erreicht, wobei die Dämpfventileinrichtung stufenlos verstellbar ausgeführt sein kann.

In weiterer vorteilhafter Ausgestaltung ist vorgesehen, dass das Federelement und der Voröffnungsventilkörper in mindestens einer elastischen Scheibe zusammengefasst sind. Grundsätzlich können das mindestens eine Federelement und der Voröffnungsventilkörper als separate Bauteile hergestellt und montiert werden. Hinsichtlich der Montage ist die Verwendung von elastischen Scheiben deutlich einfacher und kostengünstiger.

Gemäß einem vorteilhaften Unteranspruch ist das Voröffnungsventil an dem Hauptstufenventilkörper befestigt. Grundsätzlich könnte man das Voröffnungsventil auch ortsfest innerhalb der Dämpfventileinrichtung vorsehen. Dann müsste man eine erste Ventilsitzfläche für das Voröffnungsventil und eine zweite Ventilsitzfläche für das Hauptstufenventil einsetzen. Damit wäre jedoch ein erheblicher konstruktiver Aufwand verbunden. Mit der Anordnung des Voröffnungsventils am Hauptstufenventilkörper wird nur eine einzige Ventilsitzfläche, die sowohl für das Hauptstufenventil wie auch für das Voröffnungsventil dient, verwendet.

Um die Dauerfestigkeit des Voröffnungsventils positiv zu beeinflussen, wird der Öffnungsweg des Voröffnungsventils von einer Abstützfläche am Hauptstufenventilkörper begrenzt.

Dabei kann man die Abstützfläche zu einer Spannfläche des Hauptstufenventilkörpers für den Voröffnungsventilkörper radial abtrennen. Etwaige Formungenauigkeiten am Hauptstufenventilkörper beeinflussen nicht die Öffnungscharakteristik des Voröffnungsventils.

Des Weiteren besteht die Möglichkeit, dass die Abstützfläche und die Spannfläche auf unterschiedlichen Ebenen ausgeführt sind. Über einen Höhen- und einen radialen Versatz der beiden Flächen kann die Ventilcharakteristik des Voröffnungsventils exakt eingestellt werden.

Als weitere Maßnahme zur Beeinflussung der Ventilcharakteristik kann im Voröffnungsventilkörper ein permanent geöffneter Durchtrittsquerschnitt eingeformt sein. Eine Ausstanzung, z. B. in einer Ventilscheibe des Voröffnungsventils, kann sehr präzise ohne schädigenden Einfluss auf andere Ventilbauteile hergestellt werden.

Des Weiteren kann die Ventilsitzfläche für den Hauptstufenventilkörper an einem axial beweglichen Ventilsitzring ausgeführt sein, der wiederum auf einer gehäuseseitigen Ventilsitzfläche aufliegt, wobei die gehäuseseitige Ventilsitzfläche elastisch ausgeführt ist. Diese konstruktive Ausgestaltung ist insbesondere dann sinnvoll, wenn für die Öffnungsbewegung des Hauptstufenventils unterschiedliche druckbeaufschlagte Flächen für unterschiedliche Anströmrichtungen vorgesehen sind.

Auch hier besteht die Option, dass die gehäuseseitige Ventilsitzfläche von einer Scheibenfeder gebildet wird.

Eine Funktionserweiterung kann erreicht werden, wenn die Scheibenfeder mit einem Abflusskanal ein Voröffnungsventil bildet.

Anhand der folgenden Figurenbeschreibung soll die Erfindung näher erläutert werden.

Es zeigt:
Fig. 1 Dämpfventileinrichtung in einer Schnittdarstellung
Fig. 2 Detaildarstellung im Bereich eines Ventilsitzringes
Fig. 3 Voröffnungsventil mit mehreren elastischen Scheiben

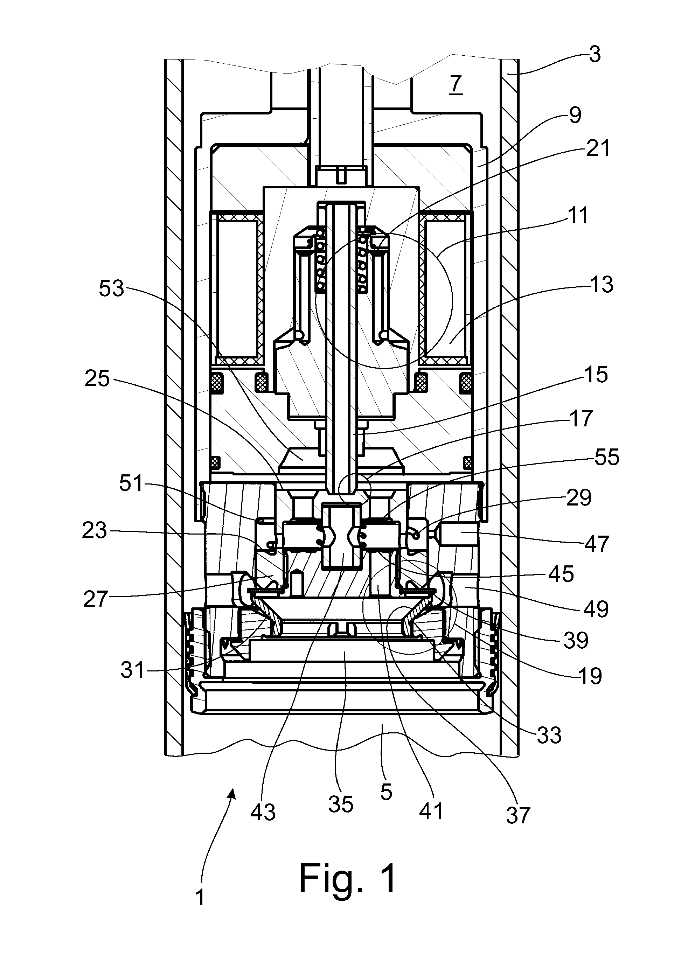

Die Figur 1 zeigt eine Dämpfventileinrichtung 1 für einen Schwingungsdämpfer beliebiger Bauform. Die Dämpfventileinrichtung 1 kann sowohl innerhalb eines Zylinders 3 des Schwingungsdämpfers zwischen zwei Arbeitsräumen 5; 7 wie auch außerhalb des Zylinders 3 in einer Bypassleitung angeordnet sein. In einem Dämpfventilgehäuse 9 ist ein Aktuator 11 angeordnet, der in diesem Beispiel eine Magnetspule 13 umfasst, die auf einen axial beweglichen Vorstufenventilkörper 15 eines Vorstufenventils 17 eine axiale Betätigungskraft ausübt. Über das Vorstufenventil 17 lässt sich die Schließkraft auf ein Hauptstufenventil 19 beeinflussen. Die Schließkraft wird bestimmt durch die Kraft mindestens einer Ventilfeder 21 und einer der Ventilfederkraft entgegenwirkenden Stellkraft des Aktuators 11 sowie einer hydraulischen Schließkraft, die durch den Druck auf mindestens eine druckbeaufschlagte Fläche 23; 25 an einem starren Hauptstufenventilkörper 27 erzeugt wird.

Der Hauptstufenventilkörper 27 wird zusätzlich von einer Hauptstufenventilfeder 29 auf einen axial beweglichen Ventilsitzring 31 vorgespannt, wobei der Ventilsitzring 31 wiederum auf einer gehäuseseitigen Ventilsitzfläche 33 aufliegt. Der Ventilsitzring 31 verfügt ausgehend von einer ersten Anströmöffnung 35 für eine erste Anströmrichtung des Dämpfmediums über eine trichterförmige Erweiterung 37, deren Stirnfläche eine Ventilsitzfläche 39 für den Hauptstufenventilkörper 27 bildet.

Für die Ausnutzung des hydraulischen Drucks innerhalb der Dämpfventileinrichtung 1 zur Erzeugung einer Schließkraft auf den Hauptstufenventilkörper 27 weist der Hauptstufenventilkörper 27 ausgehend von der ersten Anströmöffnung 35 mindestens einen Einlasskanal 41 zu einem Steuerraum 43 auf. Ein Rückschlagventil 45 am Ende des Einlasskanals 41 gibt die Strömungsrichtung in Richtung des Steuerraums vor. Ein zweiter Einlasskanal 47 führt hydraulisch parallel zu mindesten einer zweiten Anströmöffnung 49 für eine zweite Anströmrichtung der Dämpfventileinrichtung 1 ebenfalls zum Steuerraum 43. Ein Abflussquerschnitt 51 des Steuerraums 43 zu einem Rückraum 53 wird von dem Vorstufenventilkörper 15 bestimmt und bildet damit das Vorstufenventil 17. Ein zweites Rückschlagventil 55 verbindet den Rückraum 53 des Vorstufenventils 17 mit dem Steuerraum 43, um den hydraulischen Widerstand bei dieser Öffnungsbewegung des Hauptstufenventils 19 bei sich verkleinerndem Volumen des Rückraums 53 zu minimieren. Das Rückschlagventil 45 kann auch als Dämpfventil ausgeführt sein, um die Öffnungsgeschwindigkeit des Hauptstufenventils 19 zu beeinflussen.

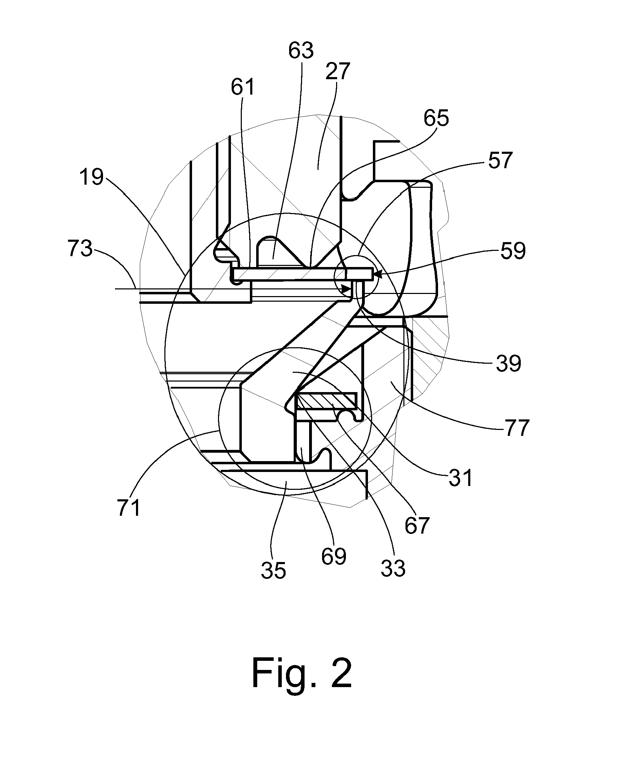

Neben dem Vorstufenventil 17 und dem Hauptstufenventil 19 verfügt die Dämpfventileinrichtung 1 über ein Voröffnungsventil 57, das mindestens ein Federelement aufweist, das wiederum einen Voröffnungsventilkörper vorspannt. Insbesondere in der Fig. 2 ist erkennbar, dass das Federelement und der Voröffnungsventilkörper in mindestens einer elastischen Scheibe 59 zusammengefasst sind. Dabei stützt sich der Hauptstufenventilkörper 27 in der geschlossenen Betriebsstellung des Hauptstufenventils 19 über das Voröffnungsventil 57 auf der Ventilsitzfläche 39 ab. Die Ventilsitzfläche 39 für das Voröffnungsventil 57 und die Ventilsitzfläche 39 für den Hauptstufenventilkörper 27 sind bei Anströmung durch die erste Anströmöffnung 35 identisch, da das Voröffnungsventil 57 bzw. bei dieser Anströmung beweglicher Komponente des Vorstufenventil 57 an dem Hauptstufenventilkörper 27 befestigt ist.

Wie weiter aus der Fig. 2 ersichtlich ist, ist der Hauptstufenventilkörper 27 mehrteilig aufgebaut. Der Hauptstufenventilkörper 27 verfügt für die elastische Scheibe 59 über eine Spannfläche 61, die über einen Ringgraben 63 zu einer Abstützfläche 65 radial abgetrennt ist. Zudem besteht noch die Möglichkeit, dass die Abstützfläche 65 und die Spannfläche 61 auf unterschiedlichen Ebenen ausgeführt sind, so dass die mindestens eine elastische Scheibe 59 in der geschlossenen Position des Voröffnungsventils 57 ggf. bereits geschirmt ist. Man kann auch vorsehen, dass die mindestens eine elastische Scheibe 59 einen permanent geöffneten Durchtrittsquerschnitt 66 aufweist.

Optional kann der Ventilsitzring 31 auch auf einer elastischen gehäuseseitigen Ventilsitzfläche 33 aufliegen, wie ebenfalls die Fig. 2 zeigt. Beispielhaft ist mindestens eine elastische Scheibenfeder 67 an dem Gehäusering 77 fixiert. Zusätzlich kann man vorsehen, dass die Scheibenfeder 67 mit einem Abflusskanal 69 ein Voröffnungsventil 57 für eine zweite Anströmrichtung über die mindestens eine zweite Anströmöffnung 49 des Dämpferventilgehäuses 9 bildet.

Bei einer Anströmung des Hauptstufenventils 19 ausgehend von der ersten Anströmöffnung 35 steht der Betriebsdruck radial innerhalb der Ventilsitzfläche 39 auf dem starren inneren Bereich des Hauptstufenventilkörpers 27 und der elastischen Scheibe an. Bedingt durch die Trichterform des Ventilsitzrings 31 ist eine druckbeaufschlagte Fläche 73 oberhalb eines Trichtereingangs größer als am Trichterausgang, so dass der Betriebsdruck im Bereich der ersten Anströmöffnung 35 für eine Fixierkraft sorgt, die den Ventilsitzring 31 auf der gehäuseseitigen Ventilsitzfläche 33 hält.

Ausgehend von der ersten Anströmöffnung 35 fließt das Dämpfmedium über den Einlasskanal 41 im Hauptstufenventilkörper 27 in den Steuerraum 43 und durch das Vorstufenventil 17 weiter in den Rückraum 53. Der Druck auf der ersten ringförmigen druckbeaufschlagten Fläche 23 und auf einer rückseitigen Stirnfläche als weitere druckbeaufschlagte Fläche 25 sowie die resultierende Kraft am Vorstufenventilkörper 15 bedingt durch die Ventilfederkraft und die Aktuatorkraft sowie die Kraft der Hauptstufenventilfeder ergeben eine Schließkraft auf den Hauptstufenventilkörper 27.

Bei geschlossenem Hauptstufenventil 19, d. h. der Hauptstufenventilkörper 27 liegt zusammen mit der elastischen Ventilscheibe auf der Ventilsitzfläche 39 auf, öffnet sich bei einer Anströmung das Vorstufenventil 17. Das Öffnungsverhalten ist u. a. abhängig von der Größe des permanent geöffneten Durchtrittquerschnitts 66. Wenn kein Durchtrittsquerschnitt 66 vorhanden ist, dann gibt das Voröffnungsventil 57 schon bei einem geringeren Druckniveau einen Durchfluss frei, d. h. die mindestens eine elastische Scheibe 59 hebt randseitseitig von der Ventilsitzfläche 39 ab. Das Voröffnungsventil 57 öffnet bauartbedingt nicht unmittelbar auf einen größeren Durchtrittsquerschnitt 66, sondern gibt über die elastische Deformation einen Durchtrittsquerschnitt 66 frei, bevor das Hauptstufenventil 19 über eine entsprechende Ansteuerung des Vorstufenventils 17 abhebt. Es wird ein weicherer Übergang von der geschlossenen Position des Hauptstufenventils 19 und einer geöffneten Betriebsstellung erreicht. Die maximale Öffnungsposition der elastischen Scheibe 59 wird durch den Hauptstufenventilkörper 27 selbst erreicht, an dem sich die elastische Scheibe 59 axial abstützen kann.

Wird das Vorstufenventil 17 entsprechend angesteuert, dann schließt das Hauptstufenventil 19 wieder. Dann wirkt die elastische Scheibe 59 des Voröffnungsventils 57 wie ein Kissen, das den Anschlag des Hauptstufenventilkörpers 27 auf die Ventilsitzfläche 39 abfedert und damit ein Anschlaggeräusch zumindest minimiert.

Bei einem Zielkonflikt zwischen der Federkraftkennlinie der elastischen Scheibe 59 im Hinblick auf die Abfederung des Hauptstufenventilkörpers 27 und dem Öffnungsverhalten des Voröffnungsventils 57 kann man z. B. mehrere Scheiben 59 vorsehen, wie in der Fig. 3 dargestellt ist. Eine erste elastische Scheibe 59 b liegt am Ventilsitzring 31 auf, wobei diese Auflagefläche am Ventilsitzring 31 keinerlei Dichtfunktion aufweisen muss. In der ersten elastischen Scheibe 59 b ist mindestens eine Druckausgleichsöffnung 75 ausgeführt, so dass das Dämpfmedium nahezu drosselfrei an der zweiten elastischen Scheibe 59 a, die das Voröffnungsventil 57 bildet, ansteht. Diese elastische Scheibe 59 a kann eine deutlich größere Federrate als die Scheibe 59 b aufweisen. Selbstverständlich kann man die Federraten der beiden elastischen Scheiben 59 a; 59 b auch genau entgegensetzt wählen, d. h. die erste elastische Scheibe 59 b verfügt über eine große Federrate im Hinblick auf die Abfederungsfunktion und die zweite elastische Scheibe 59 a weist eine kleinere Federrate im Hinblick auf eine kleine Öffnungskraft für das Voröffnungsventil auf. In jedem Fall kann die zweite elastische Scheibe 59 a für die erste elastische Scheibe 59 b eine Stützfunktion übernehmen, um die Schirmung zu begrenzen.

Wird die Dämpfventileinrichtung 1 über die radiale zweite Anströmöffnung 49, Fig. 1, beaufschlagt, dann steht der Betriebsdruck an der Unterseite des Ventilsitzrings 31 radial außerhalb der gehäuseseitigen Ventilsitzfläche 33 an. Hydraulisch parallel geschaltet wirkt ein Vorsteuerstrom über den zweiten Einlasskanal 47 in den Steuerraum 43. Das Vorstufenventil 17 bestimmt wiederum das Druckniveau an der ringförmigen druckbeaufschlagten Fläche 23 und der Rückseite 25 des Hauptstufenventilkörpers 27. Zwischen dem Rückraum 53 des Vorstufenventils 17 und der ersten Anströmöffnung 35 besteht mindestens ein nicht dargestellter Verbindungskanal, so dass das Druckniveau im Rückraum 53 von dem Druckniveau im Steuerraum 43 abweichen kann. Das Rückschlagventil 45 in Richtung des ersten Einlasskanals 41 ist geschlossen. Ebenso das Rückschlagventil 55 zwischen dem Rückraum 53 und dem Steuerraum 43.

Bei einer Öffnungsbewegung des Hauptstufenventils 19 hebt der Ventilsitzring 31 zusammen mit dem Hauptstufenventilkörper 27 von der gehäuseseitigen Ventilsitzfläche 33 ab. Der Ventilsitzring 31 ist dabei funktional als Bestandteil des Hauptstufenventilkörpers 27 zu betrachten.

Wird über das Vorstufenventil 17 eine Schließposition des Hauptstufenventils 19 vorgegeben, dann wirkt das Voröffnungsventil 57 in der vereinfachten Variante nach Fig. 1 am Hauptstufenventilkörper 27 ebenfalls abfedernd, da die elastische Scheibe 59 zwischen dem Ventilsitzring 31 und dem Hauptstufenventilkörper 27 als Feder fungiert. Die Schließbewegung wird demnach abgefedert. Versuche haben gezeigt, dass allein die Ausgestaltung nach Fig. 1 das besagte Geräuschproblem schon sehr gut löst.

Die Fig. 2 enthält zusätzlich eine Variante, bei der die Schließbewegung des Hauptstufenventils 19, also wenn der Ventilsitzring 31 wieder auf die gehäuseseitige Ventilsitzfläche 33 trifft, genau an dieser Stelle, abgefedert wird. Dazu ist auch die gehäuseseitige Ventilsitzfläche 33 elastisch ausgeführt, indem die gehäuseseitige Ventilsitzfläche 33 von einer Scheibenfeder 67 gebildet wird. Die Scheibenfeder 67 ist an einem Gehäusering 77 fixiert. Ausgehend von der radialen zweiten Anströmöffnung 49 ist der Scheibenfeder 67 im Gehäusering 77 ein Abflusskanal 69 nachgeordnet, der in der ersten Anströmöffnung 35 mündet. Somit steht auch bei einer Anströmung ausgehend von der radialen zweiten Anströmöffnung 49 ein Voröffnungsventil 57; 71 zur Verfügung. Selbstverständlich kann auch diese Scheibenfeder 67 einen permanent geöffneten Durchtrittsquerschnitt 66 aufweisen.

**Bezugszeichen**

| | |
|---|---|
| 1 | Dämpfventileinrichtung |
| 3 | Zylinder |
| 5 | Arbeitsraum |
| 7 | Arbeitsraum |
| 9 | Dämpfventilgehäuse |
| 11 | Aktuator |
| 13 | Magnetspule |
| 15 | Vorstufenventilkörper |
| 17 | Vorstufenventil |
| 19 | Hauptstufenventil |
| 21 | Ventil |
| 23 | Druckbeaufschlagte Fläche |
| 25 | Druckbeaufschlagte Fläche |
| 27 | Hauptstufenventilkörper |
| 29 | Hauptstufenventilfeder |
| 31 | Ventilsitzring |
| 33 | gehäuseseitige Ventilsitzfläche |
| 35 | erste Anströmöffnung |
| 37 | trichterförmige Erweiterung |
| 39 | Ventilsitzfläche |
| 41 | Einlasskanal |
| 43 | Steuerraum |
| 45 | Rückschlagventil |
| 47 | Einlasskanal |
| 49 | zweite Anströmöffnung |
| 51 | Abflussquerschnitt |
| 53 | Rückraum |
| 55 | zweites Rückschlagventil |
| 57 | Voröffnungsventil |
| 59 | elastische Scheibe |
| 61 | Spannfläche |
| 63 | Ringgraben |
| 65 | Abstützfläche |
| 66 | Durchtrittsquerschnitt |
| 67 | Scheibenfeder |
| 69 | Abflusskanal |
| 71 | Voröffnungsventil |
| 73 | druckbeaufschlagte Fläche |
| 75 | Druckausgleichsöffnung |
| 77 | Gehäusering |

## Patentansprüche

1. Verstellbare Dämpfventileinrichtung (1), umfassend einen Aktuator (11) zur Ansteuerung eines Hauptstufenventils (19), wobei das Hauptstufenventil (19) einen starren Hauptstufenventilkörper (27) aufweist, der eine axiale Betriebsbewegung zu einer Ventilsitzfläche (39) des Hauptstufenventils (19) ausführt, **dadurch gekennzeichnet, dass** dem Hauptstufenventilkörper (27) ein Voröffnungsventil (57) vorgeschaltet ist, das mindestens ein Federelement aufweist, das wiederum einen Voröffnungsventilkörper vorspannt, wobei sich der Hauptstufenventilkörper (27) in der geschlossenen Betriebsstellung über das Voröffnungsventil (57) auf der Ventilsitzfläche (39) abstützt.

2. Verstellbare Dämpfventileinrichtung nach Anspruch 1, **dadurch gekennzeichnet, dass** das Federelement und der Voröffnungsventilkörper in mindestens einer elastischen Scheibe (59; 67) zusammengefasst sind.

3. Verstellbare Dämpfventileinrichtung nach Anspruch 1, **dadurch gekennzeichnet, dass** das Voröffnungsventil (57) an dem Hauptstufenventilkörper (27) befestigt ist.

4. Verstellbare Dämpfventileinrichtung nach Anspruch 1, **dadurch gekennzeichnet, dass** der Öffnungsweg des Voröffnungsventils (57) von einer Abstützfläche (65) am Hauptstufenventilkörper (27) begrenzt wird.

5. Verstellbare Dämpfventileinrichtung nach Anspruch 4, **dadurch gekennzeichnet, dass** die Abstützfläche (65) zu einer Spannfläche (61) des Hauptstufenventilkörpers (27) für den Voröffnungsventilkörper radial abgetrennt ist.

6. Verstellbare Dämpfventileinrichtung nach Anspruch 5, **dadurch gekennzeichnet, dass** die Abstützfläche (65) und die Spannfläche (61) auf unterschiedlichen Ebenen ausgeführt sind.

7. Verstellbare Dämpfventileinrichtung nach Anspruch 1, **dadurch gekennzeichnet, dass** im Voröffnungsventilkörper ein permanent geöffneter Durchtrittsquerschnitt (66) eingeformt ist.

8. Verstellbare Dämpfventileinrichtung nach Anspruch 1, **dadurch gekennzeichnet, dass** die Ventilsitzfläche (39) für den Hauptstufenventilkörper (27) an einem axial beweglichen Ventilsitzring (31) ausgeführt ist, der wiederum auf einer gehäuseseitigen Ventilsitzfläche (33) aufliegt, wobei die gehäuseseitige Ventilsitzfläche (33) elastisch ausgeführt ist.

9. Verstellbare Dämpfventileinrichtung nach Anspruch 8, **dadurch gekennzeichnet, dass** das die gehäuseseitige Ventilsitzfläche (33) von einer Scheibenfeder (67) gebildet wird.

10. Verstellbare Dämpfventileinrichtung nach Anspruch 9, **dadurch gekennzeichnet, dass** die Scheibenfeder (67) mit einem Abflusskanal (69) eine Voröffnungsventil (71) bildet.
